# EUROPEAN PATENT APPLICATION

(11) **EP 4 354 211 A1**
(43) Date of publication of application: **17.04.2024**
(21) Application number: 22811407.0
(22) Date of filing: 27.05.2022
(51) Int. Cl.: G02C 11/00

(54) **EYEWEAR, AND CARTRIDGE**

(30) Priority: 28.05.2021 JP 2021089749
(71) Applicant: JINS HOLDINGS Inc., Gunma 371-0046 (JP); Tsubota Laboratory, Inc., Tokyo 160-0016 (JP)
(72) Inventor: KANEDA, Daisuke, Maebashi-shi, Gunma 371-0046 (JP)
(74) Representative: Mewburn Ellis LLP
(86) International application number: PCT/JP2022/021726
(87) International publication number: WO 2022/250139

(57) **Abstract**

Eyewear includes a front, a pair of end pieces disposed at both ends of the front, a pair of temples respectively connected to the pair of end pieces, and a cartridge having a raw material containing portion that contains a raw material, a spray element that uses the raw material to spray a mist, and a control circuit substrate that controls the spray element, and the cartridge is detachably connected to the temple or the end piece.

## Description

### Technical Field

**The** present invention relates to eyewear and a cartridge.

### Background Art

There has conventionally been a technique in which a device that sprays a mist toward an eye region is attached to eyewear to provide eye care. For example, a technique (see, e.g., Patent Document 1) in which a device that ejects microdroplets is attached to eyewear, a technique (see, e.g., Patent Document 2) in which a device that atomizes an eyedrop solution and sprays the eyedrop solution is attached to eyewear, and health equipment (see, e.g., Patent Document 3) that emits a jet mist toward an eye region have been known.

### Citation List

### Patent Documents

Patent Document 1: Japanese Patent Application Publication No. 2018-510668
Patent Document 2: Japanese Utility Model Registration No. 3055480
Patent Document 3: Japanese Utility Model Registration No. 3104861

### Summary

### Technical Problem

However, in each of the conventional techniques, when a special spray device is attached to the eyewear, the spray device is obviously visually recognizable from the outside, the eyewear gives an annoying feeling when used as normal eyewear, and therefore it cannot be said that the eyewear attached with a special spray device is comfortable to wear. In addition, when a component (e.g., an element or a circuit substrate) for spraying a mist fails, the eyewear itself has to be replaced or the entire attachable spray device should be replaced.

It is therefore an object of the present invention to provide eyewear and a cartridge which do not impair wearing comfort even when a device that sprays a mist is attached to the eyewear, and allow a component for spraying the mist to be easily replaced.

### Solution to Problem

Eyewear in an aspect of the present invention includes: a front;
a pair of end pieces disposed at both ends of the front; a pair of temples respectively connected to the pair of end pieces; and a cartridge having a raw material containing portion that contains a raw material, a spray element that uses the raw material to spray a mist, and a control circuit substrate that controls the spray element, the cartridge being detachably connected to the temple or the end piece.

### Advantageous Effects of Invention

According to the present invention, it is possible to provide eyewear and a cartridge which do not impair wearing comfort even when a device that sprays a mist is attached to the eyewear, and allow a component for spraying the mist to be easily replaced.

### Brief Description of Drawings

Fig. 1 is a perspective view illustrating an example of eyeglasses according to a first embodiment from the front.
Fig. 2 is an exploded perspective view (Part 1) illustrating an example of a cartridge according to the first embodiment.
Fig. 3 is an external perspective view illustrating an example of the cartridge according to the first embodiment.
Fig. 4 is an exploded perspective view (Part 2) illustrating an example of the cartridge according to the first embodiment.
Fig. 5 illustrates an example of a structure of a bottom portion of a raw material containing portion according to the first embodiment.
Fig. 6 is a diagram illustrating Attachment Example 1 (Part 1) of the cartridge according to the first embodiment.
Fig. 7 is a diagram illustrating Attachment Example 1 (Part 2) of the cartridge according to the first embodiment.
Fig. 8 is a diagram illustrating Attachment Example 2 of the cartridge according to the first embodiment.
Fig. 9 is a diagram illustrating Attachment Example 3 of the cartridge according to the first embodiment.
Fig. 10 is a diagram illustrating Attachment Example 4 of the cartridge according to the first embodiment.
Fig. 11 is a diagram illustrating Attachment Example 5 the cartridge according to the first embodiment.
Fig. 12 is a diagram illustrating Attachment Example 6 of the cartridge according to the first embodiment.
Fig. 13 is a diagram illustrating an example of a main body containing portion according to a second embodiment.
Fig. 14 is a diagram illustrating an example of a cover member according to the second embodiment.
Fig. 15 is a diagram illustrating an example of a cartridge product according to the second embodiment.

### Description of Embodiments

Referring to the drawings, embodiments of the present invention will be described below in detail. However, the embodiments described below are only illustrative, and there is no intention to exclude various modifications and application of techniques which are not clearly shown below. In other words, the present invention can be implemented by being variously modified within the scope not departing from the gist thereof. In the drawings referenced below, the same or similar parts are denoted by the same or similar reference signs. The drawings are schematic, and dimensions, ratios, and the like therein do not necessarily coincide with actual dimensions, ratios, and the like. The drawings may also include parts in which dimensional relationships and ratios differ between the drawings.

### [First Embodiment]

### <Eyewear>

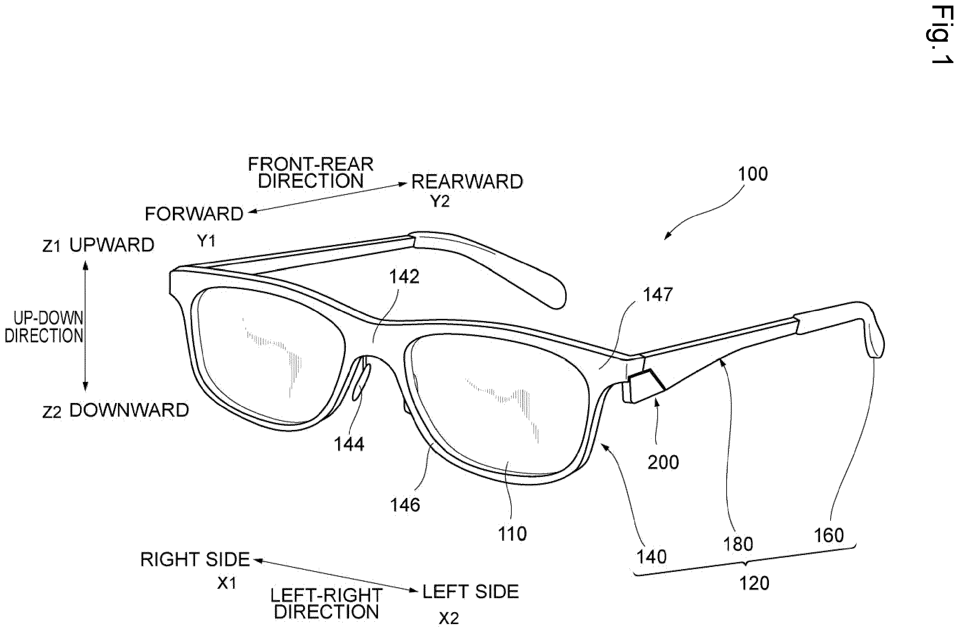

Fig. 1 is a perspective view illustrating an example of eyeglasses 100 according to the first embodiment from the front. As illustrated in Fig. 1, the eyeglasses 100 are an example of eyewear, and include a pair of lenses 110 and a frame 120. Note that, in the present embodiment, the lenses 110 will be described as a pair of objects, but need not necessarily be a pair. Also, in the first embodiment, the lenses 110 will be described as configurations of the eyeglasses 100, but the lenses 110 are not necessarily the configurations required for the eyeglasses 100.

The frame 120 includes, e.g., a front 140, a pair of temples 180 rotatably connected to both ends of the front 140 on left and right sides, and a pair of temple tips 160 attached to rear sides of the pair of temples 180. The frame 120 holds the pair of lenses 110, while holding the lenses 110 and the front 140 in appropriate attitudes with respect to eyes and a head region of a user.

**The** front 140 supports the pair of lenses 110. The temples 180 press, in conjunction with the temple tips 160, temporal regions of the user to hold the regions therebetween. The temple tips 160 also come into contact with upper regions and rear sides of ears of the user to prevent the eyeglasses 100 from falling off. Note that the temple tips 160 are configurations not necessarily required for the eyeglasses 100.

In the following description, for the sake of convenience, it is assumed that a longitudinal direction of the front 140 illustrated in Fig. 1 is a "left-right direction". It is also assumed that a left side viewed from the user when the eyeglasses 100 are worn is a "left side" (X2) and a right side viewed from the user is a "right side" (X1). In addition, it is assumed that a lateral direction of the front 140 is an "up-down direction", an upward direction from a head is an "upward direction" (Z1), and a downward direction from the head is a "downward direction" (Z2). Meanwhile, it is assumed that a thickness direction of the front 140 is "a front-rear direction", a front 140 side is a "forward direction" (Y1), and a temple tip 160 side is a "rearward direction" (Y2).

Note that the eyeglasses 100 to which the present embodiment is applied are formed laterally symmetrical, with a middle forehead portion (bridge) 142 being located at the middle therebetween. Therefore, the following will describe the laterally symmetrical configurations by assigning reference signs only to the configurations on either side of each of the drawings without distinguishing the left and right configurations from each other.

**The** front 140 has, e.g., a plate-like configuration extending along the left-right direction, and is curved so as to forwardly project, while extending along a face of the user. The front 140 also has the middle forehead portion 142 located at the middle, a pair of nose pads 144 attached to both left and right sides of a back surface of the middle forehead portion 142, a pair of rims 146 formed at both left and right ends of the middle forehead portion 142, a pair of end pieces 147 formed at respective end portions of the pair of rims 146, and a pair of first hinge portions (not shown) attached to back surfaces of the pair of end pieces 147.

The middle forehead portion 142 connects a left portion and a right portion of the front 140 (eyeglasses 100). The middle forehead portion 142 is, e.g., a curved plate-like member, and may also be formed of a resin or the like.

**The** nose pads 144 hold a nose of the user therebetween from both sides to support the front 140 and maintain a height of the front 140 with respect to the eyes of the user or the like. The nose pads 144 are, e.g., of pad arms type having resin pad portions and metal support portions. Note that deformation of the pad portions and the support portions allow the front 140 to slightly adjust an attitude thereof (e.g., a distance between corneal apexes) with respect to the nose and the eyes of the user.

**The** rims 146 hold the lenses 110. The rims 146 are, e.g., ring-shaped members formed so as to follow shapes of the lenses 110, and are formed of a resin or the like.

**The** end pieces 147 are formed with the first hinge portions (not shown). The end pieces 147 are, e.g., curved plate-like members, and are formed of a resin or the like.

The first hinge portions function as an example of connecting portions and rotatably connect, in combination with second hinge portions (not shown) each formed on a temple 180 side and having a plate-like shape, the temples 180 to the front 140. In other words, the first hinge portions and the second hinge portions are included in hinges.

The temples 180 are L-shaped members curved so as to fit to the temporal regions. Each of the temples 180 is rotatably connected to the front 140 in a range from a folded position where an angle between the temple 180 and the front 140 is smallest to an open position where the angle between the temple 180 and the front 140 is largest.

To the end piece 147 or the temple 180, a detachable cartridge 200 is attached or connected. In the first embodiment, an example is shown in which the cartridge 200 is attached along the longitudinal direction of the temple 180, but the configuration is not limited thereto. The cartridge 200 has a raw material containing portion, a spray element that uses a raw material to spray a mist, and a control circuit substrate that controls the spray element.

### <Cartridge>

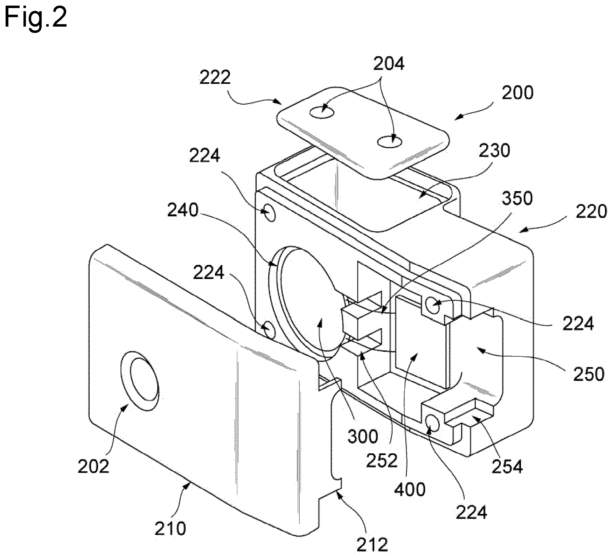

Using Figs. 2 to 4, a description will be given of an example of the cartridge 200. Fig. 2 is an exploded perspective view (Part 1) illustrating an example of the cartridge 200 according to the first embodiment. In the example illustrated in Fig. 2, the exploded top perspective view from an area side on which a component for spraying the mist is to be contained is illustrated. The cartridge 200 has a main body containing portion 220, a spray component cover portion (or a main body lid portion) 210, and a raw material lid portion 222. The cartridge 200 may also be formed of, e.g., a resin or the like. The raw material lid portion 222 may also be formed of silicon, rubber, or the like having elasticity. Figs. 2 to 4 illustrate an example of the cartridge 200 which is attached to, e.g., the temple 180 on the right side (X1), and illustrates a type that sprays the mist toward an eye side.

In the example illustrated in Fig. 2, the raw material lid portion 222 is fitted into an opening of the raw material containing portion included in the main body containing portion 220, and the spray component cover portion 210 is attached to a surface of a side of a spray-component comprised of the spray element 300 and a control circuit substrate 400 to cover the surface. In a case of a state where the raw material lid portion 222 and the spray component cover portion 210 are attached to the main body containing portion 220, these may also be integrally referred to as a main body containing portion. As will be described later, the main body containing portion 220 has a connection mechanism to be detachably connected to the temple 180 or the end piece 147.

The spray component cover portion 210 has an opening 202 at a position corresponding to a position where the spray element 300 is disposed. Through this opening 202, the mist sprayed by the spray element 300 is released to the outside. The raw material lid portion 222 has two openings 204, one of which has a function of a raw material replenishing port (e.g., an injection port) and another of which has a function of a ventilation port that adjusts a pressure inside the raw material containing portion. Alternatively, it may also be possible that the raw material lid portion 222 has only one opening, and the one opening has the functions of the replenishing port and the ventilation port.

The cartridge 200 has a width direction, a height direction, and a depth direction, and has a polygonal shape (e.g., a hexahedral shape). For example, the cartridge 200 has a substantially rectangular parallelpiped shape. The cartridge 200 includes the main body containing portion 220 of which the width direction serves as the longitudinal direction. For example, when the temple 180 is unfolded (at the time of wearing), the width direction of the cartridge 200 is along the longitudinal direction of the temple 180, the depth direction thereof is along the left-right direction of the front 140, and the height direction thereof is along the up-down direction of the face. The shape of the main body containing portion 220 illustrated in Fig. 2 is an example, need not be a substantially rectangular parallelpiped shape, and may also have trapezoidal shapes in top plan view from the width direction and the height direction or the like. The shape needs only to be determined appropriately depending on a position where the cartridge 200 is attached to a main body of the eyewear 100.

The main body containing portion 220 includes, e.g., a first containing area 230 in which the raw material containing portion is to be configured and a second containing area 240 in which the spray element 300 is to be contained. The first containing area 230 and the second containing area 240 may also be arranged side by side in the depth direction. For example, by disposing the raw material containing portion in parallel to the thin planar spray element 300, a supply path that supplies the raw material from the raw material containing portion to the spray element 300 is shortened to allow the raw material to be easily supplied to the spray element. In addition, by disposing the raw material containing portion along and in parallel to a plane of the spray element 300 by using a thin planar shape of the spray element 300, it is possible to contribute to a size reduction of the cartridge 200, while ensuring a capacity of the raw material containing portion. Moreover, by disposing the spray element 300 in parallel to the raw material containing portion, it is possible to ensure a wide plane of the spray element 300, which allows, e.g., an increased spray amount at one time or the like.

**The** main body containing portion 220 also includes a third containing area 250 in which the control circuit substrate 400 that controls the spray element 300 is to be contained, and the first containing area 230 or the second containing area 240 and the third containing area 250 may also be arranged side by side in the width direction corresponding to the longitudinal direction of the cartridge 200. For example, the third containing area 250 may also be disposed further toward the temple tip 160 side (Y2) of the temple 180 than the first containing area 230 or the second containing area 240. As a result, the second containing area 240 in which the spray element 300 is to be contained is disposed at a position closer to the eye to allow the mist to be more easily sprayed to the periphery of the eye.

In addition, the openings of the second containing area 240 and the third containing area 250, which are present in the same surface of the main body containing portion 220, and the spray element 300 and the control circuit substrate 400, which are contained in the same direction, allow the spray element 300 and the control circuit substrate 400 electrically connected thereto to be easily contained from the same direction. For example, between the second containing area 240 and the third containing area 250, a groove 252 through which a wire 350 connecting the spray element and the control circuit substrate passes is provided. For the groove 252, a space sufficient to allow the wire 350 to pass therethrough needs only to be ensured and, as this space is narrower, the mist from a spray element 300 side is less likely to pass through the third containing area 250, and it is possible to enhance a waterproof function for the control circuit substrate 400.

Alternatively, the opening in the first containing area 230 and the opening in the third containing area 250 may appropriately be provided in different surfaces. When the raw material is, e.g., a liquid, presence of a direction in which the raw material is replenished to the raw material containing portion and a direction in which the control circuit substrate 400 is contained in the different surfaces makes it difficult for the raw material inside the raw material containing portion to enter the control circuit substrate 400 and can enhance the waterproof function for the control circuit substrate 400.

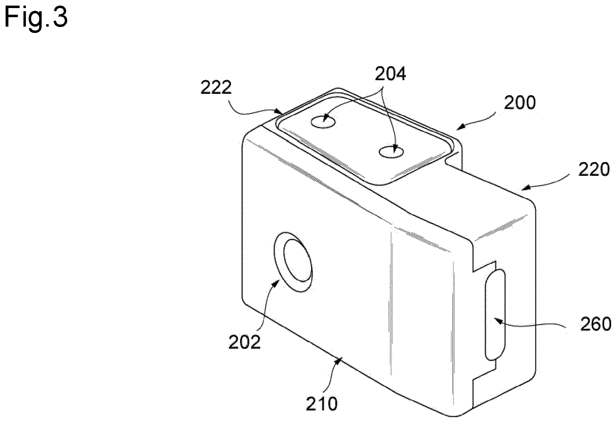

The spray component cover portion 210 has a wall 212 forming an opening 260 (see Fig. 3) of the main body containing portion 220 at the time of attachment. For example, the wall 212 may also have such an U-shaped shape as to project from a spray component cover portion 210 side. The opening 260 may allow a connection mechanism having a protruding shape from the main body containing portion 220 to the temple 180 or the end piece 147 to project therethrough or may also be formed with a recessed portion that receives a connection mechanism having a protruding shape and provided in the temple 180 or the end piece 147.

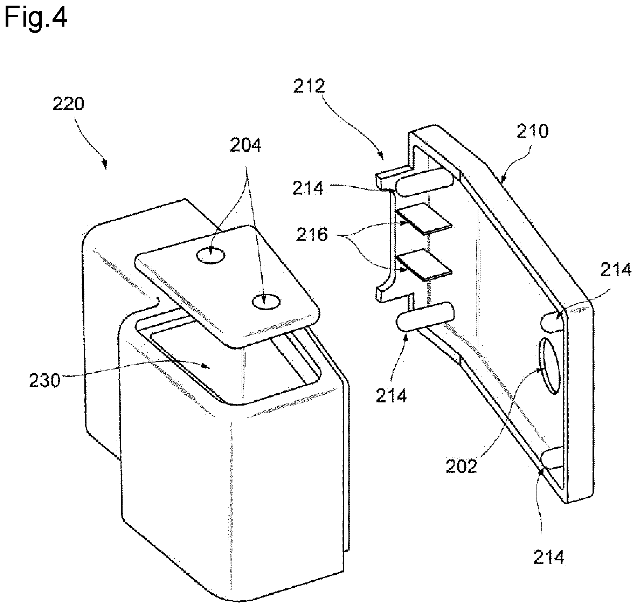

The spray component cover portion 210 has respective protruding portions 214 (see Fig. 4) at four corner portions, and the protruding portions 214 are respectively fitted into corresponding recessed portions 224 (see Fig. 2) of the main body containing portions 220 to fix the spray component cover portion 210 to the main body containing portion 220 (see Fig. 3). Examples of the protruding portions 214 include bosses and the like. The protruding portions 214 may also have different lengths and shapes, and the protruding portions 214 and the recessed portions 224 on a third containing area 250 side may also be replaced with a screwed structure.

Fig. 3 is an external perspective view illustrating an example of the cartridge 200 according to the first embodiment. The cartridge 200 is formed with the opening 202 that allows the mist to pass therethrough to the outside, the openings 204 serving as the replenishing port and the ventilation port for the raw material with respect to the raw material containing portion, and the opening 260 that forms the connection mechanism with the temple 180 and the end piece 147. From the opening 260, a connection terminal (e.g., a USB connector) which is also applicable to power source supply may also project.

Fig. 4 is an exploded perspective view (Part 2) illustrating an example of the cartridge 200 according to the first embodiment. In the example illustrated in Fig. 4, unlike in Fig. 2, an exploded top perspective view of a first containing area 230 side of the raw material containing portion is shown. In the example illustrated in Fig. 4, at respective corner portions on a back side of the spray component cover portion 210, the protruding portions 214 are formed. Additionally, one or a plurality of ribs 216 may also be provided so as to inwardly extend from the wall 212 forming the opening 260. For example, it may also be possible that the connection terminal protruding from the opening 260 is pressed by the ribs 216 to be stably positioned.

### <Spray Element>

The spray element 300 is an element that atomizes the raw material contained in the raw material containing portion of the first containing area 230 into the mist and sprays the mist. The mist is, e.g., a moisture mist and contains at least a micro-liquid. The spray element 300 is any of an ultrasonic oscillation element that oscillates the raw material to be able to generate at least the micro-liquid, an atomizer element that causes a depressurized state using an air flow to be able to change a liquid to a mist-like micro-liquid, and the like.

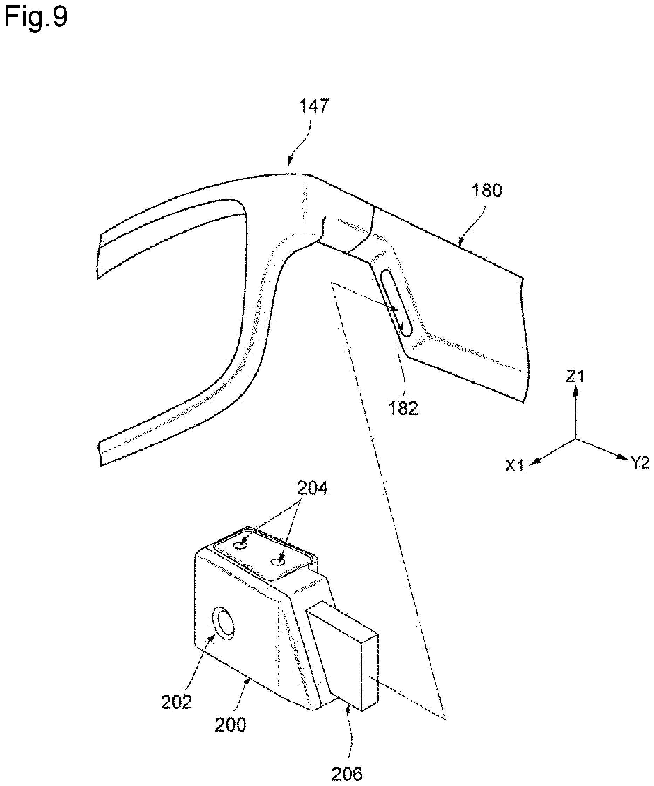

**The** spray element 300 described above needs only to spray the atomized raw material as the micro-liquid or a micro-solid irrespective of whether the raw material is a solid or a liquid. The mist containing a fragrance component such as an aromatic substance may also be sprayed in a direction (outwardly) opposite to a direction toward the eye (see, e.g., Fig. 9).

A structure or form of the spray element 300 is not particularly limited, but the thin spray element 300 having a planar shape is preferred. The spray element 300 is preferably provided with a size and a shape according to a portion to which the spray element 300 is to be attached.

For example, to the ultrasonic oscillation element, each of various ultrasonic oscillation elements which perform ultrasonic atomization separation of the raw material (e.g., liquid raw material) to be able to produce a micro-liquid of about several micrometers (e.g., about 1 µm to 10 µm) is applicable.

For example, the atomizer element uses a structural principle of using an air flow of air or the like to bring a liquid supply path into a depressurized state and spraying the atomized micro-liquid from an air flow path by using the depressurized state. The spray element 300 may also include such an atomizer element. Alternatively, the spray element 300 may also be a composite of the ultrasonic oscillation element and the atomizer element.

### <Raw Material Containing Portion>

The raw material containing portion in the first containing area 230 is a portion that contains the raw material to be atomized into the mist by the spray element 300. A structure and a shape of the raw material containing portion are not particularly limited as long as the raw material containing portion is configured to have a function of being able to supply the raw material to the spray element 300. In the example illustrated in Figs. 2 to 4, the raw material containing portion is provided inside the cartridge 200.

The raw material containing portion may contain a liquid or a solid as is or may also contain a liquid-absorbing material or a liquid-retaining material such as sponge or felt impregnated with the liquid. The raw material containing portion may be configured to have a replenishing port (inlet port) for replenishing (injecting) the raw material or may also be configured to have an opening that allows the raw material to be exchanged. The raw material containing portion may also be configured such that a bottom portion thereof has a supply port through which the raw material is to be supplied to the spray element 300.

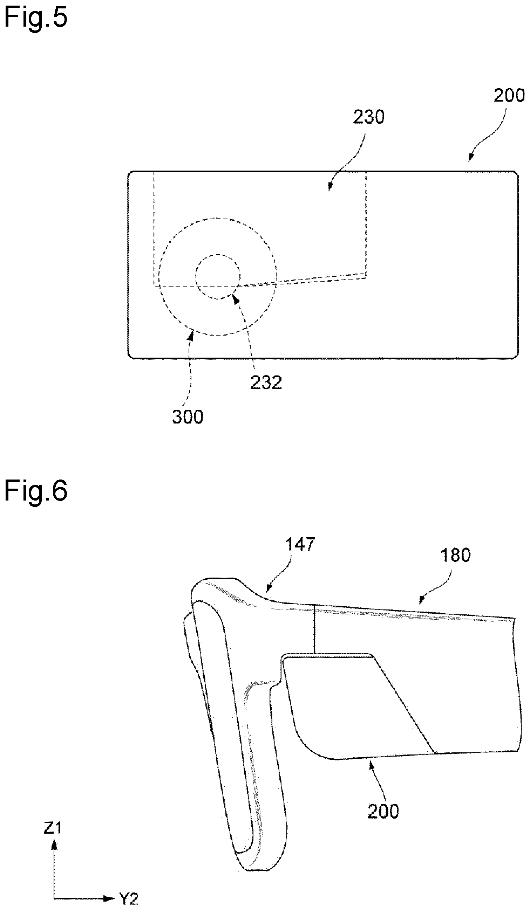

Fig. 5 is a diagram illustrating an example of a structure of the bottom portion of the raw material containing portion according to the first embodiment. In the example illustrated in Fig. 5, a positional relationship between the raw material containing portion inside the cartridge 200 and a supply port 232 to the spray element 300 is indicated by dotted lines. In the example illustrated in Fig. 5, the bottom portion of the raw material containing portion in the first containing area 230 is preferably provided with an inclination such that the supply port 232 to the spray element 300 corresponds to a deepest portion. In the first containing area 230, the supply port 232 supplying the raw material to the spray element 300 is provided, and a bottom surface in the first containing area 230 is provided with an inclination so as to allow the raw material to flow toward the supply port 232. Thus, when the raw material is a liquid, it is possible to prevent the raw material from remaining inside the raw material containing portion.

**The** raw material may be a liquid raw material, a solid raw material, or a mixture thereof. The raw material needs only to be sprayed as the micro-liquid or micro-solid by the spray element 300. In general, a liquid is used preferably. Besides the liquid raw material, a raw material that becomes a micro-liquid before reaching the eye or while being sprayed to the outside is preferred, and it may also be possible to, e.g., spray the micro-solid or spray the mixture of the micro-liquid and the micro-solid by using the spray element 300.

### <Attachment Examples of Cartridge>

Next, a description will be given of examples of attachment of the cartridge 200 to the eyewear 100. The following attachment examples are only examples, and various attachment structures are applicable to the first embodiment.

For example, the cartridge 200 may also have a structure in which the cartridge 200 is connected along the longitudinal direction of the temple 180 to be detachable when the temple 180 is folded with respect to the front 140 and undetachable when the temple 180 is unfolded with respect to the front 140. With this configuration, the cartridge 200 is undetachable when the eyewear 100 is worn (when the eyewear 100 is unfolded), and therefore it is possible to prevent the cartridge 200 from falling off at the time of wearing. Meanwhile, when the eyewear 100 is unworn (when the eyewear 100 is folded), the cartridge 200 can be attached/detached to allow replacement of the cartridge 200 or the like. In other words, by adopting the configuration described above, it is possible to prevent the cartridge 200 from unintentionally falling off while the eyewear 100 is normally worn and in a use operation and remove the cartridge 200 at the same time as an operation of putting away the eyewear 100 (operation of folding the temples 180), which allows usability to be improved.

As a specific example, the cartridge 200 may also have a structure in which, when the temple 180 is unfolded, the cartridge 200 is held between the temple 180 and the front 140 or the end piece 147 in an attachment/detachment direction of the cartridge 200 to be undetachable. The following four can be listed as examples of this structure.

### (Example 1) Protruding portion (e.g., connection terminal) on temple 180 side of cartridge 200.

When the cartridge 200 is attached/detached along the longitudinal direction of the temple 180, the cartridge 200 may also have a protruding portion on the temple 180 side in the attachment/detachment direction. The protruding portion is attached by being fitted into a recessed portion of the temple 180 to be fixed. The protruding portion of the cartridge 200 has a length in the attachment/detachment direction which is larger than a distance from an end portion of the cartridge 200 on an end piece 147 side to the end piece 147 located at a position facing this end portion when the temple 180 is unfolded. For example, when the temple 180 is unfolded in a state where the cartridge 200 is attached, a length of a gap provided between the end piece 147 and the cartridge 200 in the attachment/detachment direction is shorter than the length of the protruding portion of the cartridge 200 in the attachment/detachment direction (see, e.g., Fig. 6).

As a result, when the cartridge 200 is to be attached/detached in the attachment/detachment direction when the eyewear 100 is worn (when the temple 180 is unfolded), the cartridge 200 comes into contact with the end piece 147, and the protruding portion of the cartridge 200 cannot completely come off the recessed portion of the temple 180. Therefore, when the eyewear 100 is worn (when the temple 180 is unfolded), the cartridge 200 cannot be detached from the temple 180.

### (Example 2) Protruding portion on end piece side of cartridge

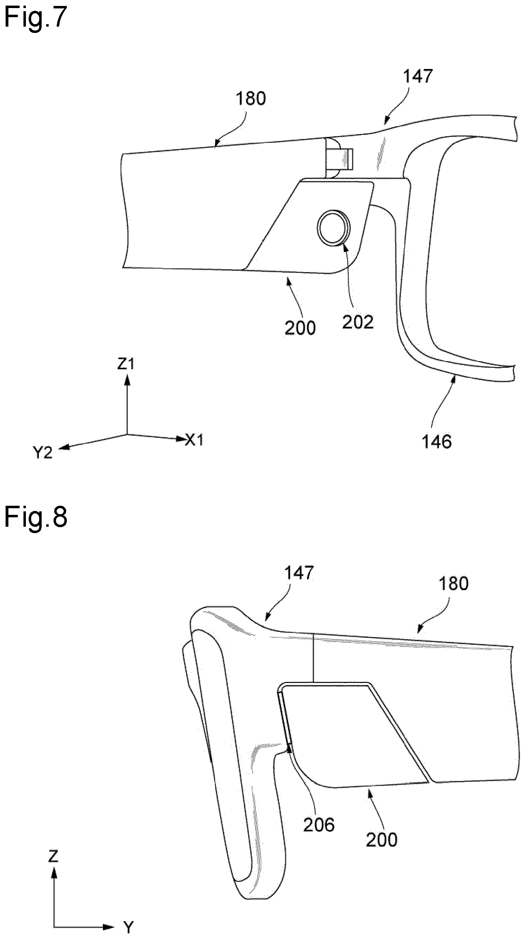

When the cartridge 200 is attached/detached along the longitudinal direction of the temple 180, the cartridge 200 may also have a protruding portion on the end piece 147 side in the attachment/detachment direction. This protruding portion is attached by being fitted into a recessed portion of the end piece 147 to be fixed. The protruding portion has a length in the attachment/detachment direction which is larger than a distance from an end portion of the cartridge 200 on the temple 180 side to the temple 180 located at a position facing this end portion when the temple 180 is unfolded. For example, when the temple 180 is unfolded in the state where the cartridge 200 is attached, a length of a gap provided between the temple 180 and the cartridge 200 in the attachment/detachment direction is shorter than the length of the protruding portion of the cartridge 200 in the attachment/detachment direction (see, e.g., Fig. 8).

**As** a result, when the cartridge 200 is to be attached/detached in the attachment/detachment direction when the eyewear 100 is worn (when the temple 180 is unfolded), the cartridge 200 comes into contact with the temple 180, and the protruding portion of the cartridge 200 cannot completely come off the recessed portion of the end piece 147. Therefore, when the eyewear 100 is worn (when the temple 180 is unfolded), the cartridge 200 cannot be detached from the end piece 147.

### (Example 3) Protruding portion at temple 180

When the cartridge 200 is attached/detached along the longitudinal direction of the temple 180, the cartridge 200 may also have a recessed portion on the temple 180 side in the attachment/detachment direction. This recessed portion is attached by interfitting with the protruding portion of the temple 180 to be fixed. The protruding portion has a length in the attachment/detachment direction which is larger than a distance from an end portion of the cartridge 200 on the end piece 147 side to the end piece 147 located at a position facing this end portion when the temple 180 is unfolded. For example, when the temple 180 is unfolded in the state where the cartridge 200 is attached, a length of a gap provided between the end piece 147 and the cartridge 200 in the attachment/detachment direction is shorter than the length of the protruding portion of the temple 180 in the attachment/detachment direction.

**As** a result, when the cartridge 200 is to be attached/detached in the attachment/detachment direction when the eyewear 100 is worn (when the temple 180 is unfolded), the cartridge 200 comes into contact with the end piece 147, and the protruding portion of the temple 180 cannot completely come off the recessed portion of the cartridge 200. Therefore, when the eyewear 100 is worn (when the temple 180 is unfolded), the cartridge 200 cannot be detached from the temple 180.

### (Example 4) Protruding portion at end piece 147

When the cartridge 200 is attached/detached along the longitudinal direction of the temple 180, the cartridge 200 may also have a recessed portion on the end piece 147 side in the attachment/detachment direction. This recessed portion is attached by interfitting with a protruding portion of the end piece 147 to be fixed. The protruding portion has a length in the attachment/detachment direction which is larger than a distance from an end portion of the cartridge 200 on the temple 180 side to the temple 180 located at a position facing this end portion when the temple 180 is unfolded. For example, when the temple 180 is unfolded in the state where the cartridge 200 is attached, a length of a gap provided between the temple 180 and the cartridge 200 in the attachment/detachment direction is shorter than the length of the protruding portion of the end piece 147 in the attachment/detachment direction.

**As** a result, when the cartridge 200 is to be attached/detached in the attachment/detachment direction when the eyewear 100 is worn (when the temple 180 is unfolded), the cartridge 200 comes into contact with the temple 180, and the protruding portion of the end piece 147 cannot completely come off the recessed portion of the cartridge 200. Therefore, when the eyewear 100 is worn (when the temple 180 is unfolded), the cartridge 200 cannot be detached from the end piece 147.

The cartridge 200 may also include a terminal to be connected to a power source provided in a portion of the eyewear 100 except for the cartridge 200. This terminal may be electrically disconnected from the power source when the temple 180 is folded with respect to the front 140, while being electrically connected to the power source when the temple 180 is unfolded with respect to the front 140. As a result, the control circuit substrate of the cartridge 200 is not energized when the eyewear is unworn, and it is possible to prevent unneeded spraying of the mist and also contribute to power saving.

For example, it may also be possible that an end piece 147 portion has a terminal to be connected to the power source inside the eyewear 100, and this terminal is provided at a position where the terminal is brought into contact with a terminal of the cartridge 200 when the temple 180 is unfolded, while being removed from contact with the terminal of the cartridge 200 when the temple 180 is folded.

**As** the power source, a chargeable battery is preferred, and may also be disposed in, e.g., a temple tip 160 portion. In this case, in the temple 180, a cable is provided to connect the power source and the terminal. Alternatively, the power source may also be connected to a terminal to be connected to a separate charging connector and to a terminal to be connected to the control circuit substrate inside the cartridge 200. Note that the terminal to be connected to the charging connector and the terminal to be connected to the cartridge 200 may also be a common terminal. Alternatively, the power source (chargeable battery) may also be provided on a cartridge 200 side. In this case, the terminal on the cartridge 200 side may also serve as the charging terminal.

A mechanism that determines whether or not to energize the control circuit substrate may also be provided at a connection position (e.g., a peripheral position where the hinge is provided) between the end piece 147 and the temple 180. For example, between the end piece 147 and the temple 180, a switch mechanism is provided. In this case, the switch mechanism may appropriately be configured such that, by turning ON a switch when the temple 180 is unfolded to bring an end portion of the temple 180 into contact with the end piece 147, the control circuit substrate inside the cartridge 200 is energized. The switch mechanism may also be configured appropriately such that, by turning OFF the switch when the temple 180 is folded to bring the end portion of the temple 180 away from the end piece 147, the energization of the control circuit substrate inside the cartridge 200 is no longer performed.

When the cartridge 200 has the power source therein, no connection terminal is required on the main body side of the eyewear 100. In this case, the switch mechanism described above may also be provided on the main body side of the eyewear 100.

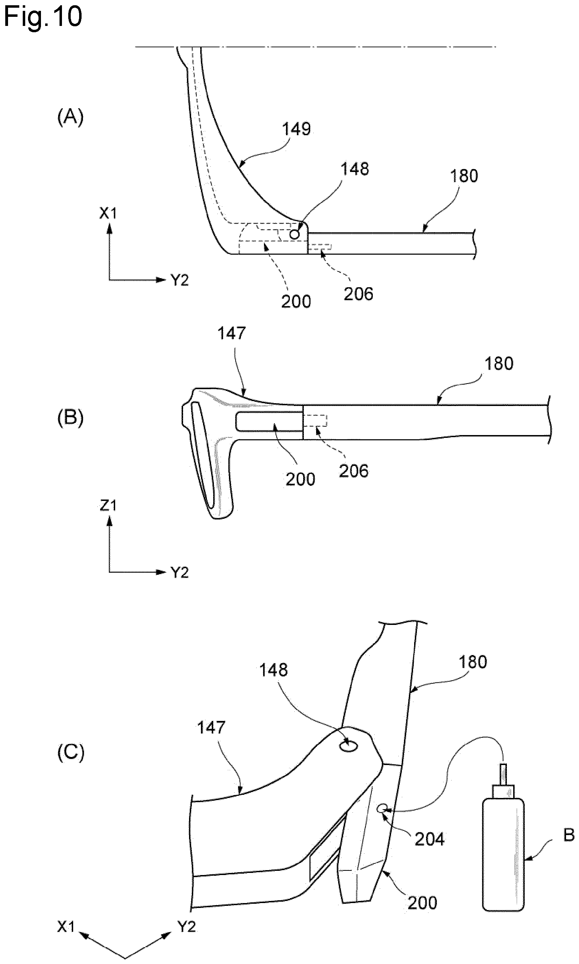

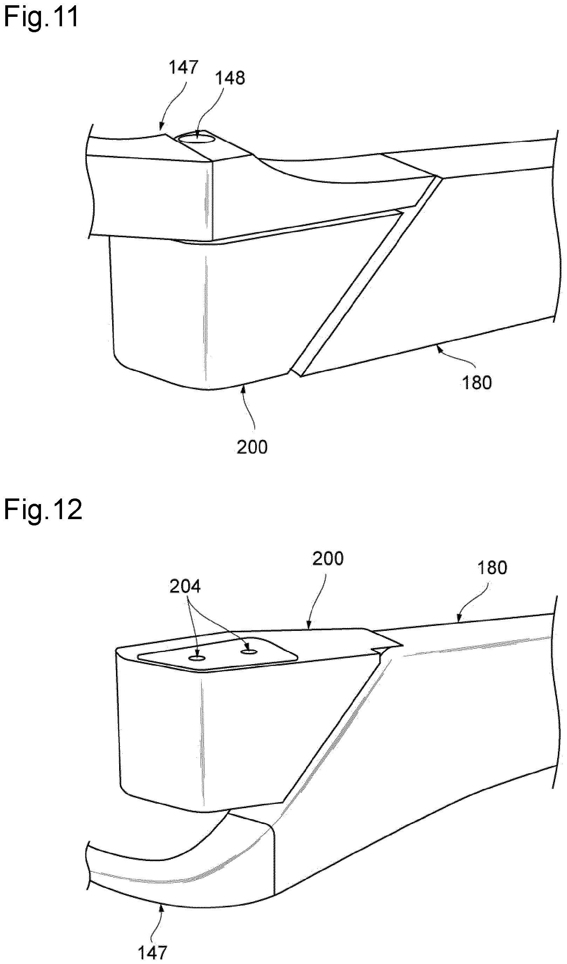

Using the drawings, a description will be given below of an attachment example of the cartridge 200. Figs. 6 and 7 illustrate an example of Example 1 described above (the protruding portion on the temple 180 side of the cartridge 200). Fig. 8 illustrates an example of Example 2 described above (the protruding portion on the end piece 147 side of the cartridge 200). Fig. 9 illustrates an example in which the mist is sprayed to the outside opposite to the eye. Fig. 10 illustrates another example of Example 1 described above. Each of examples illustrated in Figs. 11 and 12 indicates an example different from Examples 1 to 4 described above.

Fig. 6 is a diagram illustrating Attachment Example 1 (Part 1) of the cartridge 200 according to the first embodiment. In the example illustrated in Fig. 6, a diagram when the left temple 180 is viewed from X2 in an X1 direction is shown. As illustrated in Fig. 6, the cartridge 200 is connected to the temple 180. In addition, exactly as in Example 1 described above, when the temple 180 is unfolded, an end portion of the cartridge 200 on the end piece 147 side has at least a portion facing at least a portion of the end piece 147 via a small gap interposed therebetween. Thus, the cartridge 200 is restricted from moving in the attachment/detachment direction thereof.

In other word, when the temple 180 is unfolded, the cartridge 200 is held between a portion of the end piece 147 and the temple 180 to be undetachable. Meanwhile, when the temple 180 is folded, the end piece 147 is not present at a position facing an end of the cartridge 200 opposite to the temple 180, and the cartridge 200 is not restricted from moving in the attachment/detachment direction, and therefore the cartridge 200 is detachable.

Fig. 7 is a diagram illustrating Attachment Example 1 (Part 2) of the cartridge 200 according to the first embodiment. In the example illustrated in Fig. 7, a diagram of the left temple 180 when viewed from X1 in an X2-direction is shown. As illustrated in Fig. 7, inside (on an X1 side of) the cartridge 200, the opening 202 is provided to allow the mist to pass therethrough to the outside. As a result, the raw material supplied from the raw material containing portion is atomized by the spray element 300 into the mist, the mist is sprayed from the opening 202, and the mist can reach the eye of the user.

It may also be possible that the opening 202 is provided outside (on an X2 side of) the cartridge 200, and the mist is sprayed to the outside opposite to the eye. For example, in a case of the raw material containing a fragrance component, the raw material is atomized into the mist and sprayed toward the outside of the eyewear 100 to be able to provide a nice fragrance in the periphery of the eyewear 100 (see, e.g., Fig. 9).

Fig. 8 is a diagram illustrating Attachment Example 2 of the cartridge 200 according to the first embodiment. In the example illustrated in Fig. 8, a diagram when the left end piece 147 and the left temple 180 are viewed from X2 in the X1 direction is shown. As illustrated in Fig. 8, a protruding portion 206 of the cartridge 200 is connected to the recessed portion on the end piece 147 side to be attached. In addition, exactly as in Example 2 described above, when the temple 180 is unfolded, an end portion of the cartridge 200 on the temple 180 side has at least a portion facing at least a portion of the temple 180 via a small gap interposed therebetween. Thus, the cartridge 200 is restricted from moving the in the attachment/detachment direction thereof.

In other words, when the temple 180 is unfolded, the cartridge 200 is held between a portion of the end piece 147 and the temple 180 to be undetachable. Meanwhile, when the temple 180 is folded, the temple 180 is not present at a position facing an end portion of the cartridge 200 opposite to the end piece 147, and the cartridge 200 is not restricted from moving in the attachment/detachment direction, and therefore the cartridge 200 is detachable.

Fig. 9 is a diagram illustrating Attachment Example 3 of the cartridge 200 according to the first embodiment. In the example illustrated in Fig. 9, a diagram when the left temple 180 is viewed from X2 in the X1 direction and from Z2 in a Z1 direction is shown. As illustrated in Fig. 9, the protruding portion 206 of the cartridge 200 is attached to a recessed portion 182 of the temple 180 of the eyewear 100 below the hinge. Also, in the example illustrated in Fig. 9, the cartridge 200 is attached to the temple 180 such that the opening 202 of the cartridge 200 is located outside the eyewear 100. In this case, the mist passes through the opening 202 to be sprayed toward the outside and, accordingly, by replenishing the raw material containing a fragrance having, e.g., a relaxing effect or the like to the raw material containing portion, a wearer is allowed to enjoy the fragrance having the relaxing effect or the like. Note that, unlike in the examples illustrated in Figs. 6 to 9, the cartridge 200 may also be attached to the main body of the eyewear 100 above the hinge.

Figs. 10 are diagrams illustrating Attachment Example 4 of the cartridge 200 according to the first embodiment. In the example illustrated in Figs. 10, the cartridge 200 has a length of not more than a length of each of the temple 180 and the end piece 147 in a Z-direction. In the temple 180 and the end piece 147, a space extending therethrough in an X-direction is formed and, in the space, the cartridge 200 is contained.

Fig. 10(A) is the diagram illustrating Attachment Example 4 of the cartridge 200 according to the first embodiment in top view. In the example illustrated in Fig. 10(A), a hood portion 149 is provided in a front portion to allow a humidity around the eye to be maintained. A hinge portion 148 is a mechanism that rotatably attaches the end piece 147 and the temple 180 to each other. In the example illustrated in Fig. 10(A), in the X-direction, the cartridge 200 is provided adjacent to the hinge portion 148. Note that the protruding portion 206 of the cartridge 200 may also be inserted into the recessed portion of the temple 180.

Fig. 10(B) is a diagram illustrating a diagram illustrating Attachment Example 4 of the cartridge 200 according to the first embodiment when viewed from X2 in the X1 direction. In the example illustrated in Fig. 10(B), as described above, in the temple 180 and the end piece 147, the space extending therethrough in the X-direction is formed and, in this space, the cartridge 200 is contained. In a state illustrated in Fig. 10(B), the cartridge 200 is undetachable.

Fig. 10(C) is a diagram illustrating a state where the temple 180 is slightly folded in Attachment Example 4 of the cartridge 200 according to the first embodiment. In the example illustrated in Fig. 10(C), the cartridge 200 can replenish a liquid from the replenishing port 204 in an upper surface by using a bottle B. The cartridge 200 can be moved in the attachment/detachment direction as a direction along the temple 180 to be detachable.

**An** example illustrated in Figs. 11 and 12 shows a configuration having no restriction on the movement of the cartridge 200 in the attachment/detachment direction. Fig. 11 is a diagram illustrating Attachment Example 5 of the cartridge 200 according to the first embodiment. In the example illustrated in Fig. 11, a structure is shown in which the cartridge 200 is attached/detached under the hinge including the hinge portion 148, and a connection mechanism for the cartridge 200 is provided in the temple 180. Also, in the example illustrated in Fig. 11, the cartridge 200 is detachable from the temple 180 even when the eyewear is worn (when the temple 180 is unfolded).

Fig. 12 is a diagram illustrating Attachment Example 6 of the cartridge 200 according to the first embodiment. In the example illustrated in Fig. 12, a structure is shown in which the cartridge 200 is attached/detached over the hinge, and the connection mechanism for the cartridge 200 is provided in the temple 180. Also, in the example illustrated in Fig. 12, the cartridge 200 is detachable from the temple 180 even when the eyewear is worn (when the temple 180 is unfolded).

Note that the attachment examples of the cartridge 200 described above are examples, and it may also be possible to provide a form in which, e.g., the entire cartridge 200 is fitted into a recessed portion provided in the temple 180 or the front 140 (end piece 147) from one of the up-down and left-right directions to be attached.

### [Second Embodiment]

Next, a description will be given of a cartridge product according to the second embodiment. In the second embodiment, a cover member covering each of openings in a main body containing portion is integrally molded to reduce the number of components (reduce cost) and allow a waterproof function and/or a water stopping function to be performed. Hereinbelow, the cover member and a cartridge main body (main body containing portion) will be collectively referred to also as the cartridge product, and the cover member in the cartridge product to which the cover member is attached will be referred to also as a cover portion.

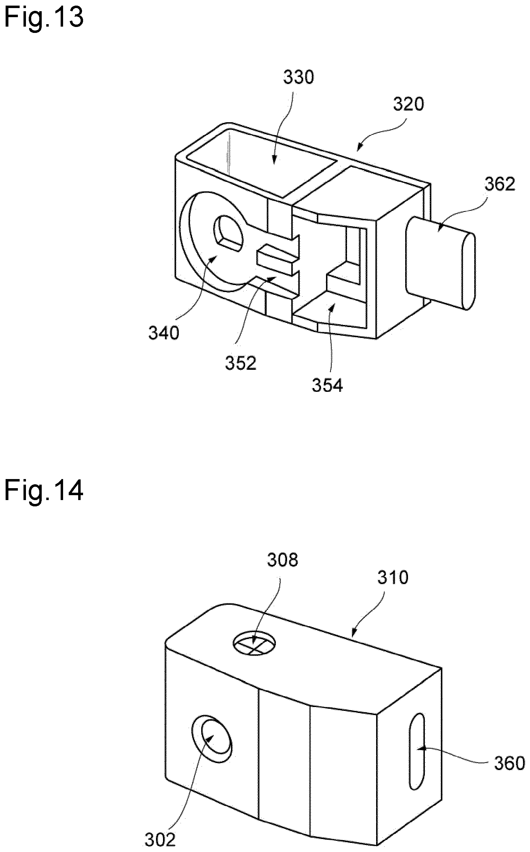

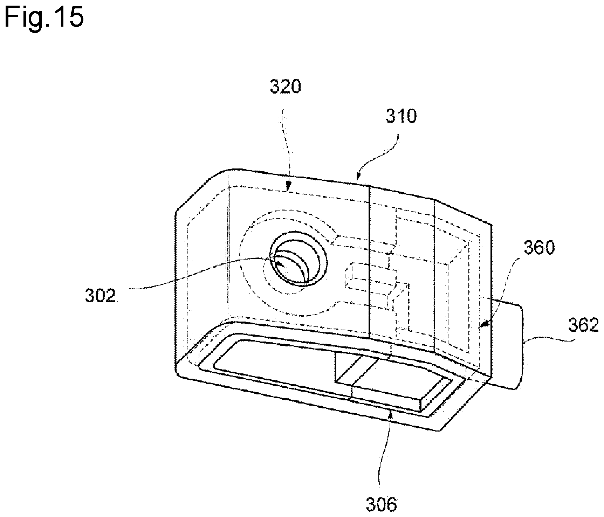

Fig. 13 is a diagram illustrating an example of a main body containing portion 320 according to the second embodiment. Fig. 14 is a diagram illustrating an example of a cover member 310 according to the second embodiment. Fig. 15 is a diagram illustrating an example of the cartridge product according to the second embodiment. The main body containing portion 320 illustrated in Fig. 13 is basically the same as the main body containing portion 220 illustrated in Fig. 2, and has a first containing area 330 serving as a raw material containing portion, a second containing area 340 that contains a spray element, and a third containing area 354 that contains a control circuit substrate.

Meanwhile, a groove 352 in which a wire connecting the spray element and the control circuit substrate is to be disposed is provided between the second containing area 340 and the third containing area 354 of the main body containing portion 320. In addition, a connection terminal (e.g., a USB connector) 362 forming a cartridge-side protruding portion is provided at the main body containing portion 320 and, in this case, the temple 180 or the end piece 147 is provided with a receiving portion to be connected to the USB connector 362.

**As** described above, the main body containing portion 320 according to the second embodiment has the raw material containing portion that contains the raw material, the spray element that uses a raw material to spray a mist, and the main body containing portion 320 that contains the control circuit substrate that controls the spray element. In addition, the main body containing portion 320 has a connection mechanism to be detachably connected to the temple 180 or the end piece 147 of the eyewear 100. The cartridge includes the cover member 310 (see Fig. 14) covering the main body containing portion 320 and having elasticity. The cover member 310 is formed of silicon, rubber, or the like having elasticity.

The cover member 310 illustrated in Fig. 14 has a first opening 302 that allows the mist to pass therethrough to the outside, a second opening 306 (see Fig. 15) that allows the cover member 310 to be attached/detached with respect to the main body containing portion 320, and a third opening 360 that uses the connection mechanism 362 to allow connection to the eyewear. Note that the second opening 306 and the third opening 360 may also be the same opening. In this case, when the main body containing portion 320 is inserted by widening the third opening 360 (serving also as the second opening 306) in the cover member 310 from a side of a surface (opposite surface) of the main body containing portion 320 facing a surface thereof having the connection mechanism 362 (e.g., the connection terminal) to attach the cover member 310, the connection mechanism 362 projects from the third opening 360. By thus minimizing the openings in the cover member 310, it is possible to enhance a waterproof effect.

**The** cover member 310 may also have a fourth opening 308 that allows the raw material to be replenished to the raw material containing portion. The fourth opening 308 illustrated in Fig. 14 shows cross-cut slits, but is not limited to this shape. Note that, in the fourth opening 308, an opening in a cross portion is deformed when the raw material is replenished, and a portion thereof functions also as a ventilation port. Alternatively, the cover member 310 may also have a fifth opening (ventilation port) for adjusting a pressure inside the raw material containing portion in addition to the fourth opening 308. When the raw material is a solid, the fourth opening 308 need not necessarily be provided.

**Alternatively,** the cover member 310 may also have a first protruding portion having a protruding shape, corresponding to the opening in the first containing area 330 of the raw material containing portion, and extending toward the inside of the raw material containing portion. In addition, the cover portion 310 may also have a second protruding portion having a protruding shape, corresponding to the opening in the third containing area 354 of the control circuit substrate, and extending toward the inside of the third containing area 354. The first protruding portion of the cover member 310 enhances a lid function of the raw material containing portion to be able to reduce the possibility that, e.g., a liquid contained in the raw material containing portion leaks to the outside from the opening and allow a water stopping effect to be achieved. Meanwhile, the second protruding portion of the cover member 310 enhances a lid function of the third containing area 354 to allow a closed space to be formed in, e.g., the third containing area 354 in which the control circuit substrate is to be contained and allow a waterproof effect of the third containing area 354 to be achieved.

Alternatively, the opening in the raw material containing portion corresponding to the first containing area 330 and the opening in the third containing area 354 of the control circuit substrate may also be provided in different surfaces of the main body containing portion 320. Alternatively, a region of the cover member 310 corresponding to the opening of the raw material containing portion and a region thereof corresponding to the opening in the control circuit substrate may also be provided in different surfaces of the cover portion 310. Thus, when the cover member 310 is removed, it is possible to reduce the possibility of entrance of a liquid or the like from the raw material containing portion into the third containing area 354 of the control circuit substrate.

**The** region of the cover member 310 corresponding to the opening in the raw material containing portion may also be provided in a surface facing a surface in which the second opening 306 is located. To explain using Fig. 15, below the cover member 310, the second opening 306 that allows the main body containing portion 320 to be attached/detached is provided and, above a side opposite to the second opening 306, a region with a lid function including the fourth opening 308 is provided. Meanwhile, the second opening 306 is provided in a center portion of a bottom surface of the cover member 310 so as to leave a peripheral edge portion thereof. As a result, the peripheral edge portion of the bottom surface of the cover member 310 is brought into press contact with the bottom surface of the main body containing portion 320, and a region of the cover member 310 corresponding to the opening of the raw material containing portion is brought into press contact in a bottom surface direction, and therefore liquid leakage from the raw material containing portion is easily prevented.

While the present invention has been described heretofore using each of the embodiments, the technical scope of the present invention is not limited to a scope described in the above embodiment. It is obvious to a person skilled in the art to be able to variously modify or improve the above embodiment. It is clear from the description of the claims that a form resulting from such modification or improvement may also be included in the technical scope of the present invention. Note that, in the first and second embodiments, the form of the cartridge integrally including the spray element component and the raw material containing portion has been described, but it may also be possible that the cartridge includes the spray element component, while the raw material containing portion is provided in the main body of the eyewear 100 including the temples 180, the end pieces 147, the front 140, and the like. In this case, when the spray element component fails, only the cartridge including the spray element component may appropriately be replaced.

### Reference Signs List

- 100: Eyeglasses
- 120: Frame
- 140: Front
- 147: End piece
- 180: Temple
- 200: Cartridge
- 202, 204, 260: Opening
- 206, 362: Connection Mechanism
- 220, 320: Main body containing portion
- 230, 330: First containing area
- 240, 340: Second containing area
- 250, 354: Third containing area
- 300: Spray element
- 302: First opening
- 306: Second opening
- 360: Third opening
- 308: Fourth opening
- 400: Control circuit substrate

## Claims

1. Eyewear comprising:
a front;
a pair of end pieces disposed at both ends of the front;
a pair of temples respectively connected to the pair of end pieces; and
a cartridge having a raw material containing portion that contains a raw material, a spray element that uses the raw material to spray a mist, and a control circuit substrate that controls the spray element,
the cartridge being detachably connected to the temple or the end piece.

2. The eyewear according to claim 1, wherein
the cartridge includes a main body containing portion having a width direction, a height method, and a depth direction, and the width direction serves as a longitudinal direction, and
the main body containing portion includes a first containing area in which the raw material containing portion is configured and a second containing area in which the spray element is contained, and the first containing area and the second containing area are arranged side by side in the depth direction.

3. The eyewear according to claim 2, wherein
the main body containing portion includes a third containing area in which the control circuit substrate is contained, and
the first containing area or the second containing area, and the third containing area are arranged side by side in the width direction.

4. The eyewear according to claim 1, wherein
the cartridge is connected along a longitudinal direction of the temple, and
the cartridge is detachable when the temple is folded with respect to the front, while being undetachable when the temple is unfolded with respect to the front.

5. The eyewear according to claim 4, wherein, when the temple is unfolded, the cartridge is held between the temple and the front or the end piece in an attachment/detachment direction of the cartridge so that the cartridge is undetachable.

6. The eyewear according to claim 4, wherein, when the cartridge is attached/detached along the longitudinal direction of the temple,
the cartridge has a protruding portion on a temple side thereof in an attachment/detachment direction of the cartridge,
the protruding portion is attached by being fitted into a recessed portion of the temple, and
the protruding portion has, in the attachment/detachment direction, a length which is larger than a distance from an end portion of the cartridge on an end piece side thereof to the end piece located facing the end portion when the temple is unfolded.

7. The eyewear according to claim 4, wherein, when the cartridge is attached/detached along the longitudinal direction of the temple,
the cartridge has a protruding portion on an end piece side thereof in an attachment/detachment direction of the cartridge,
the protruding portion is attached by being fitted into a recessed portion of the end piece, and
the protruding portion has, in the attachment/detachment direction, a length which is larger than a distance from an end portion of the cartridge on a temple side thereof to the temple located facing the end portion when the temple is unfolded.

8. The eyewear according to claim 4, wherein, when the cartridge is attached/detached along the longitudinal direction of the temple,
the cartridge has a recessed portion on a temple side thereof in an attachment/detachment direction of the cartridge,
the recessed portion is attached by interfitting with a protruding portion of the temple, and
the protruding portion has, in the attachment/detachment direction, a length which is larger than a distance from an end portion of the cartridge on an end piece side thereof to the end piece located facing the end portion when the temple is unfolded.

9. The eyewear according to claim 4, wherein, when the cartridge is attached/detached along the longitudinal direction of the temple,
the cartridge has a recessed portion on an end piece side thereof in an attachment/detachment direction of the cartridge,
the recessed portion is attached by interfitting with a protruding portion of the end piece, and
the protruding portion has, in the attachment/detachment direction, a length which is larger than a distance from an end portion of the cartridge on a temple side thereof to the temple located facing the end portion when the temple is unfolded.

10. The eyewear according to claim 1, wherein
the cartridge includes a terminal to be connected to a power source provided in a portion of the eyewear except for the cartridge, and
the terminal is electrically disconnected from the power source when the temple is folded with respect to the front, while being electrically connected to the power source when the temple is unfolded with respect to the front.

11. A cartridge comprising
a main body containing portion that contains a raw material containing portion that contains a raw material, a spray element that uses the raw material to spray a mist, and a control circuit substrate that controls the spray element; and
a connection mechanism to be detachably connected to a temple or an end piece of eyewear.

12. The cartridge according to claim 11, wherein
the main body containing portion has a width direction, a height method, and a depth direction, and the width direction serves as a longitudinal direction,
the cartridge is connected, with the width direction extending along the longitudinal direction of the temple, and
the main body containing portion includes a first containing area in which the raw material containing portion is contained and a second containing area in which the spray element is contained, and the first containing area and the second containing area are arranged side by side in the depth direction.

13. The cartridge according to claim 12, wherein
the main body containing portion includes a third containing area in which the control circuit substrate is contained, and
the third containing area, and the first containing area or the second containing area, are arranged side by side in the width direction.

14. The cartridge according to claim 11, further comprising a terminal to be connected to a power source provided on an eyewear side, wherein
the terminal is electrically disconnected from the power source when the temple is folded with respect to a front of the eyewear, while being electrically connected to the power source when the temple is unfolded with respect to the front.

## Amended claims

### Amended claims under Art. 19.1 PCT

1. Eyewear comprising:
a front;
a pair of end pieces disposed at both ends of the front;
a pair of temples respectively connected to the pair of end pieces; and
a cartridge having a raw material containing portion that contains a raw material, a spray element that uses the raw material to spray a mist, and a control circuit substrate that controls the spray element,
the cartridge being detachably connected to the temple or the end piece.

2. The eyewear according to claim 1, wherein
the cartridge includes a main body containing portion having a width direction, a height direction, and a depth direction, and the width direction serves as a longitudinal direction, and
the main body containing portion includes a first containing area in which the raw material containing portion is configured and a second containing area in which the spray element is contained, and the first containing area and the second containing area are arranged side by side in the depth direction.

3. The eyewear according to claim 2, wherein
the main body containing portion includes a third containing area in which the control circuit substrate is contained, and
the first containing area or the second containing area, and the third containing area are arranged side by side in the width direction.

4. The eyewear according to claim 1, wherein
the cartridge is connected along a longitudinal direction of the temple, and
the cartridge is detachable when the temple is folded with respect to the front, while being undetachable when the temple is unfolded with respect to the front.

5. The eyewear according to claim 4, wherein, when the temple is unfolded, the cartridge is held between the temple and the front or the end piece in an attachment/detachment direction of the cartridge so that the cartridge undetachable.

6. The eyewear according to claim 4, wherein, when the cartridge is attached/detached along the longitudinal direction of the temple,
the cartridge has a protruding portion on a temple side thereof in an attachment/detachment direction of the cartridge,
the protruding portion is attached by being fitted into a recessed portion of the temple, and
the protruding portion has, in the attachment/detachment direction, a length which is larger than a distance from an end portion of the cartridge on an end piece side thereof to the end piece located facing the end portion when the temple is unfolded.

7. The eyewear according to claim 4, wherein, when the cartridge is attached/detached along the longitudinal direction of the temple,
the cartridge has a protruding portion on an end piece side thereof in an attachment/detachment direction of the cartridge,
the protruding portion is attached by being fitted into a recessed portion of the end piece, and
the protruding portion has, in the attachment/detachment direction, a length which is larger than a distance from an end portion of the cartridge on a temple side thereof to the temple located facing the end portion when the temple is unfolded.

8. The eyewear according to claim 4, wherein, when the cartridge is attached/detached along the longitudinal direction of the temple,
the cartridge has a recessed portion on a temple side thereof in an attachment/detachment direction of the cartridge,
the recessed portion is attached by interfitting with a protruding portion of the temple, and
the protruding portion has, in the attachment/detachment direction, a length which is larger than a distance from an end portion of the cartridge on an end piece side thereof to the end piece located facing the end portion when the temple is unfolded.

9. The eyewear according to claim 4, wherein, when the cartridge is attached/detached along the longitudinal direction of the temple,
the cartridge has a recessed portion on an end piece side thereof in an attachment/detachment direction of the cartridge,
the recessed portion is attached by interfitting with a protruding portion of the end piece, and
the protruding portion has, in the attachment/detachment direction, a length which is larger than a distance from an end portion of the cartridge on a temple side thereof to the temple located facing the end portion when the temple is unfolded.

10. The eyewear according to claim 1, wherein
the cartridge includes a terminal to be connected to a power source provided in a portion of the eyewear except for the cartridge, and
the terminal is electrically disconnected from the power source when the temple is folded with respect to the front, while being electrically connected to the power source when the temple is unfolded with respect to the front.

11. A cartridge comprising:
a main body containing portion that contains a raw material containing portion that contains a raw material, a spray element that uses the raw material to spray a mist, and a control circuit substrate that controls the spray element; and
a connection mechanism to be detachably connected to a temple or an end piece of eyewear.

12. The cartridge according to claim 11, wherein
the main body containing portion has a width direction, a height direction, and a depth direction, and the width direction serves as a longitudinal direction,
the cartridge is connected, with the width direction extending along the longitudinal direction of the temple, and
the main body containing portion includes a first containing area in which the raw material containing portion is contained and a second containing area in which the spray element is contained, and the first containing area and the second containing area are arranged side by side in the depth direction.

13. The cartridge according to claim 12, wherein
the main body containing portion includes a third containing area in which the control circuit substrate is contained, and
the third containing area, and the first containing area or the second containing area, are arranged side by side in the width direction.

14. The cartridge according to claim 11, further comprising a terminal to be connected to a power source provided on an eyewear side, wherein
the terminal is electrically disconnected from the power source when the temple is folded with respect to a front of the eyewear, while being electrically connected to the power source when the temple is unfolded with respect to the front.
